# DEMANDE DE BREVET EUROPEEN

(11) **EP 2 950 235 A1**
(43) Date de publication de la demande: **02.12.2015**
(21) Numéro de dépôt: 15167279.7
(22) Date de dépôt: 12.05.2015
(51) Int. Cl.: G06K 9/00, G01B 11/25, G03B 21/26, G09F 19/18, G06T 7/00, G06T 19/00, H04N 9/31, H04N 13/00

(54) **PROCEDE DE PROJECTION DE DONNEES VIRTUELLES ET DISPOSITIF PERMETTANT CETTE PROJECTION**

(30) Priorité: 27.05.2014 FR 1454761
(71) Demandeur: Airbus Group SAS, 75016 Paris (FR)
(72) Inventeur: Chevassus, Nicolas, 92370 CHAVILLE (FR); Marraud, Denis, 92130 ISSY LES MOULINEAUX (FR); Tarault, Antoine, 75012 PARIS (FR); Perrotton, Xavier, 92320 CHATILLON (FR)
(74) Mandataire: Ipside

(57) **Abrégé**

- La présente invention concerne un procédé de projection d'informations issues d'un modèle numérique de conception comprenant les étapes suivantes :
- une étape de calibration comprenant une acquisition de données caractéristiques provenant d'une surface d'intérêt, la comparaison desdites données caractéristiques avec des données virtuelles issues du modèle numérique de conception , et la détermination d'une position spatiale du dispositif de projection comprenant un vidéoprojecteur et au moins deux dispositifs d'acquisition d'image distincts, et,
- une étape de projection selon ladite position spatiale d'informations issues du modèle de conception numérique au moyen dudit vidéoprojecteur, sur ladite surface d'intérêt.

## Description

### Domaine de l'invention

La présente invention concerne un procédé de projection sur une surface d'intérêt, de données virtuelles provenant d'un modèle de conception numérique réalisé par un bureau d'étude.

Elle s'applique à un grand nombre de domaines, notamment, l'aéronautique, le bâtiment, la construction marine ou encore la construction spatiale.

La présente invention s'applique plus particulièrement aux objets de grande taille tels que les aéronefs, les hélicoptères ou encore les satellites, lors de procédés de construction, d'assemblage ou encore de maintenance.

### Etat de la technique

La connaissance de l'état d'un objet réel en cours de fabrication ou en service est souvent partielle. Un industriel dispose généralement de recueils de mesures dans des dossiers de fichiers (par exemple des tableurs, des photos ou des fichiers de mesure) ou dans des bases de données. Il est alors difficile, et en particulier pour des objets de grande taille, non seulement de retrouver les mesures issues du réel et associées à une zone particulière et de comprendre où les mesures ont été effectués, mais surtout de les relier et de les mettre en correspondance entre elles ou en regard d'une maquette numérique de conception en trois dimensions. De ce fait, la compréhension de l'état en cours de fabrication ou en service n'est pas aisée.

Lors des opérations d'installation, d'assemblage et de maintenance, un opérateur est amené à effectuer de nombreuses tâches comme l'exécution de procédures, la prise de mesures, la réalisation de diagnostics, de comptes rendus de travaux,...etc.

L'opérateur utilise généralement des plans papiers ou des calques pour comprendre et localiser les différentes tâches à réaliser. Il va aussi utiliser des moyens conventionnels de mesure, tel qu'un réglet. Ce procédé de travail peut s'avérer coûteux en temps, et des erreurs peuvent se produire (erreur de positionnement, endommagement, mauvaise référence, ...).

Un moyen d'effectuer plus rapidement et efficacement ces tâches est de projeter de l'information directement sur une surface d'intérêt. La surface d'intérêt correspond à la surface avec laquelle l'opérateur doit interagir.

On peut par exemple utiliser un système de marquage par laser comme cela a été démontré dans la demande de brevet américain N° US 2009/0195753 A1. Cette demande révèle un dispositif pour la projection de marquage laser sur l'extérieur d'un véhicule comprenant plusieurs projecteurs laser, une image de l'extérieur du véhicule projetée sous une forme synchronisée par lesdits projecteurs lasers, un ordinateur relié aux projecteurs lasers et une centrale de travail reliée aux projecteurs lasers par l'intermédiaire de l'ordinateur et permettant de coordonner les images projetées par les projecteurs lasers. Ce dispositif de projection d'informations est cependant complexe à mettre en oeuvre et ne permet d'afficher qu'une quantité d'informations réduite du fait des limitations inhérentes à la projection laser (scintillement, perte de luminosité).
Un dispositif assez similaire est exposé dans la demande de brevet européen N° EP 1 719 580 A2. En effet, cette demande de brevet révèle un dispositif de projection d'informations sur une surface d'intérêt par l'intermédiaire de projecteurs laser. Ce dispositif utilise des émetteurs métrologiques permettant, par l'intermédiaire de récepteurs métrologiques positionnés sur la surface d'intérêt et sur les projecteurs lasers, de connaitre la position et l'orientation de ces derniers. Ce dispositif possède cependant les mêmes limitations que le système précédent et est donc limité en types d'informations. De plus le système de calibration est long à cause de la nécessité de positionner différents émetteurs et récepteurs métrologiques.

Un autre moyen de projection connu est mis en oeuvre par l'intermédiaire d'un vidéoprojecteur et d'une unique caméra. Ce système est difficile et long à mettre en oeuvre car il s'appuie sur le positionnement préalable de marqueurs à des positions précises sur la surface d'intérêt.

Aujourd'hui, toutes les solutions de projection d'informations connues sont malheureusement soit complexes, soit peu flexibles et mobiles, ou longues à calibrer. Par conséquent, ces méthodes s'avèrent inefficaces et inutilisables dans la majorité des opérations d'assemblage. D'autre part, elles ont généralement été pensées pour réaliser une seule tâche bien spécifique telle que la désignation d'une position ou seulement le suivi de cibles.
Il est donc mis en avant, à ce jour, un besoin d'effectuer plus simplement et efficacement des projections d'informations flexibles et mobiles avec une grande précision.

### Exposé de l'invention

La présente invention vise à pallier tout ou partie des inconvénients de l'art antérieur en proposant un dispositif permettant de mettre en oeuvre un procédé de projection d'informations précisément recalées sur l'environnement.

A cet effet, selon un premier aspect, la présente invention concerne un procédé de projection d'informations issues d'un modèle numérique de conception comprenant les étapes suivantes :
- une étape de calibration comprenant une acquisition de données caractéristiques provenant d'une surface d'intérêt, la comparaison desdites données caractéristiques avec des données virtuelles issues du modèle numérique de conception , et la détermination d'une position spatiale du dispositif de projection comprenant un vidéoprojecteur et au moins deux dispositifs d'acquisition d'image distincts, et,
- une étape de projection selon ladite position spatiale d'informations issues du modèle de conception numériqueau moyen dudit vidéoprojecteur, sur ladite surface d'intérêt.

Les données caractéristiques représentent une reconstruction virtuelle de la structure tridimensionnelle de la surface d'intérêt obtenue par la corrélation des données acquises par chacun desdits dispositifs d'acquisition d'images.

Grâce à ces dispositions, l'invention permet d'analyser une structure tridimensionnelle d'une surface d'intérêt et de guider un opérateur chargé de réaliser des opérations de montage ou de contrôle de ladite surface d'intérêt. Dans le cas d'une opération de montage l'invention permettrait par exemple de projeter l'empreinte d'un équipement à installer sur une pièce. Dans le cas d'une opération de contrôle l'invention permettrait par exemple de projeter la structure tridimensionnelle du modèle de conception numérique sur la structure tridimensionnelle de la surface d'intérêt permettant ainsi à l'opérateur de constater les différences entre les deux structures. Par ailleurs, la détermination spatiale des points caractéristiques de la surface d'intérêt sur ledit modèle de conception numérique est facilitée car l'invention permet de s'affranchir d'une étape de positionnement préalable de marqueurs à des positions précises sur la surface d'intérêt dans le but de repérer sur un modèle de conception numérique, la position spatiale des informations liées à la surface d'intérêt par rapport à la position spatiale desdits marqueurs. Cette étape de positionnement de marqueurs est souvent une source d'erreurs quant à la précision du positionnement.

Dans des modes de réalisation, l'étape de calibration comporte les sous-étapes suivantes : projection de motifs de calibration sur ladite surface d'intérêt, analyse desdits motifs de calibration et création d'un ensemble de correspondances entre les dispositifs d'acquisition d'images et le vidéoprojecteur, et détermination de la position spatiale des dispositifs d'acquisition d'images et du vidéoprojecteur en fonction d'un maximum de correspondances. Ces modes de réalisation permettent de déterminer précisément la position spatiale du vidéoprojecteur par rapport aux dispositifs d'acquisition d'image et ensuite de déterminer la position spatiale du dispositif de projection par rapport à la surface d'intérêt.

Dans des modes de réalisation, l'étape de calibration est réalisée en continue de la manière suivante : projection en complément du modèle de conception numérique et en continudesdits motifs de calibration et recalage de la calibration sur la surface d'intérêt, analyse des motifs par les dispositifs d'acquisition d'images et détermination continue de la position spatiale desdits dispositifs d'acquisition d'images et du vidéoprojecteur. En particulier, ces modes de réalisation permettent de déterminer en continue la position spatiale du vidéoprojecteur par rapport aux dispositifs d'acquisition d'images et du dispositif de projection par rapport à la surface d'intérêt, plus précisément, à chaque nouvelle extraction d'image. Cela permet par exemple de pallier aux problèmes de précision de la calibration lorsque le dispositif permettant la projection est mobile et lorsque des déplacements parasites apparaissent entre les dispositifs d'acquisition d'images et le vidéoprojecteur.

Selon des modes de réalisation, le procédé comprend des étapes de détection et mise en évidence de différences entre ledit modèle de conception numérique et la réalité.

Selon des modes de réalisation, le procédé comporte des étapes pour le suivi et la détermination de position spatiale d' objets mobiles connus dans le champ de vue des dispositifs d'acquisition d'images. Cela permet de faciliter l'interaction de l'opérateur avec la surface d'intérêt.

Selon des modes de réalisation, le procédé comprend des étapes pour la compensation des vibrations et des étapes pour l'alerte en cas d'incapacité à effectuer cette compensation. Cela permet d'éviter les erreurs dues aux mouvements parasites du projecteur et des dispositifs d'acquisition d'images notamment par une adaptation des réglages desdits dispositifs d'acquisition d'images.

Selon des modes de réalisation, le procédé comporte des étapes pour éviter les ombrages sur la surface d'intérêt.

Selon des modes de réalisation, le procédé comprend des étapes pour effectuer les projections en trois dimensions. Cela permettra une meilleure visualisation des informations par l'opérateur muni de lunettes actives.

Selon un autre aspect, la présente invention vise un dispositif de projection d'informations issues d'un modèle numérique de conception, comportant un vidéoprojecteur, un ordinateur et au moins deux dispositifs d'acquisition d'images et comprenant en outre des moyens pour :
- acquérir des données caractéristiques provenant d'une surface d'intérêt,
- comparer lesdites données caractéristiques avec des données virtuelles issues du modèle de conception numérique,
- déterminer une position spatiale desdits dispositifs d'acquisition d'images, dudit vidéoprojecteur et dudit dispositif de projection, et
- pour projeter, selon ladite position spatiale, des informations issues du modèle de conception numérique au moyen dudit vidéoprojecteur, sur ladite surface d'intérêt.

L'ordinateur permet la gestion des données entre les dispositifs d'acquisition d'images, le modèle de conception numérique et le vidéoprojecteur.

Dans des modes de réalisation, les dispositifs d'acquisition d'images sont des caméras à obturation globale *(« global shutter »* en terminologie anglo-saxonne). Cela à pour avantage d'éviter les déformations d'image liées au déplacement des dispositifs.

Dans des modes de réalisation, le dispositif de projection de données virtuelles comprend au moins deux sources d'éclairage infra rouge. Cela permet aux dispositifs d'acquisition d'images d'assurer un suivi de tout objet mobile collaboratif comportant des cibles infrarouges dans le champ de vue des dispositifs d'acquisition d'images. Cela permet de facilité l'interaction de l'opérateur avec la surface d'intérêt.

Dans des modes de réalisation, le dispositif de projection de données virtuelles comprend un moyen apte à adapter les réglages des dispositifs d'acquisition d'images en fonction des vibrations et à déclencher un signal d'alerte lorsque les vibrations sont trop importantes. Cela permet d'améliorer la qualité de l'image projetée en adaptant les réglages de projection aux contraintes liées aux vibrations.

Dans des modes de réalisation, le moyen apte à adapter les réglages des dispositifs d'acquisition d'images en fonction des vibrations et à déclencher un signal d'alerte lorsque les vibrations sont trop importantes comprend un capteur inertiel rigidement lié au vidéoprojecteur. Ce capteur inertiel permet de détecter les vibrations.

Dans des modes de réalisation, le vidéoprojecteur est monté sur un système mécanique instrumenté comprenant un capteur de position et éventuellement motorisé. Cela permet un repositionnement du vidéoprojecteur de façon à étendre ou réduire la zone couverte par la projection. De plus,la position issue du capteur de position permet de mettre à jour la position spatiale du dispositif de projection dans le modèle de conception numérique.

Dans des modes de réalisation, le dispositif de projection de données virtuelles comprend un système d'alimentation autonome. Ces dispositions ont pour avantage de permettre au dispositif d'être plus mobile.

Dans des modes de réalisation, tous les éléments du dispositif de projection d'informations issues d'un modèle de conception numérique, sont regroupés dans deux boitiers, le premier comprenant le vidéoprojecteur et les dispositifs d'acquisition d'images et le second comprenant l'ordinateur et l'alimentation. Cela confère à l'invention un avantage lié au transport et à la mobilité du dispositif qui va permettre à l'opérateur de le manipuler avec aisance.

Dans des modes de réalisation, les deux boîtiers dans lesquels sont regroupés tous les éléments du dispositif de projection, sont encastrables l'un sur l'autre.

### Brève description des dessins

On comprendra mieux l'invention à l'aide de la description, faite ci-après à titre purement explicatif, d'un mode de réalisation de l'invention, en référence aux Figures dans lesquelles :
- la Figure 1 est un ordinogramme représentant le procédé selon un mode de réalisation de l'invention ; et
- la Figure 2 illustre une projection de données virtuelles selon des modes de réalisation de l'invention.

### Description détaillée des modes de réalisation de l'invention

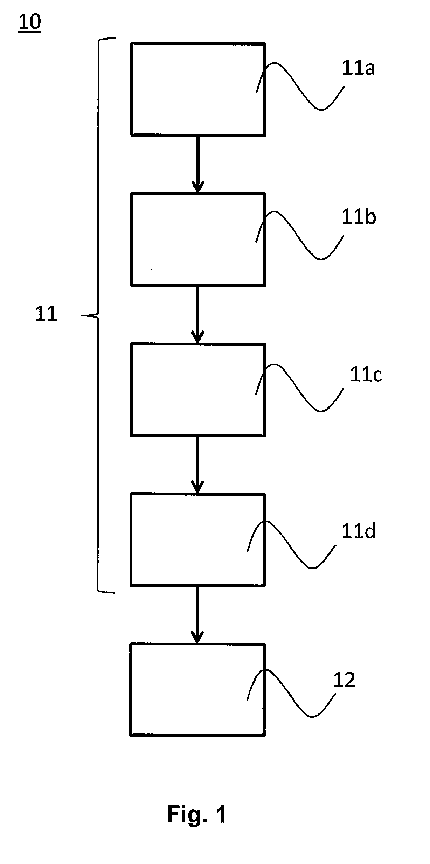

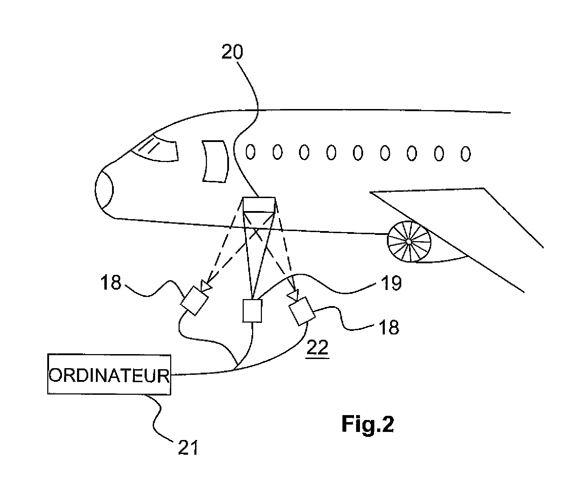

La Figure 1 est un ordinogramme représentant le procédé 10 selon un mode de réalisation de l'invention. Dans une première étape 11, une calibration est effectuée. Cette étape 11 comprend une sous-étape 11a de projection avec un vidéoprojecteur 19, de motifs de calibration sur une surface d'intérêt 20 visible sur la Figure 2. Dans une sous-étape 11 b suivante, au moins deux dispositifs d'acquisition d'images vont réaliser une acquisition de données caractéristiques effectuée par analyse des motifs de calibration projetés sur la surface d'intérêt 20. En effet, les dispositifs d'acquisition d'images 18 captent le rendu du motif sur la surface d'intérêt 20 et ledit rendu est alors analysé par ordinateur 21 afin d'être exprimé en un ensemble de données caractéristiques formant une structure tridimensionnelle. Dans une sous-étape 11 c suivante, les données caractéristiques sont comparées avec les données issues du modèle numérique de conception permettant ainsi, par l'intermédiaire d'un algorithme de vision, de créer un ensemble de correspondances entre les dispositifs d'acquisition d'images 18 et le vidéoprojecteur 19. Enfin, dans une sous-étape 11 d, la position spatiale du vidéoprojecteur 19 par rapport aux dispositifs d'acquisition d'images 18 est déterminée en fonction d'un maximum de correspondance que ledit algorithme a établi entre eux. La position spatiale du dispositif de projection 22, comprenant le vidéoprojecteur 19 et les dispositifs d'acquisition d'images 18, par rapport à la surface d'intérêt, est alors déterminée. Dans une dernière étape 12, selon la position spatiale du dispositif de projection 22 déterminée, des informations associées aux données virtuelles issues du modèle de conception numérique sont projetées sur la surface d'intérêt 20. Cette projection de données virtuelles est précise car elle provient du modèle de conception numérique. Cette précision au niveau de données virtuelles projetées facilite les opérations d'assemblage ou de diagnostic de l'opérateur. L'opérateur détecte alors avec précision les différences entre ledit modèle de conception numérique et la réalité car elles sont mises en évidence par cette projection.

La calibration peut être optimisée en continu par projection, en complément du modèle de conception numérique et en continu, de motifs de calibration par le vidéoprojecteur 19 sur la surface d'intérêt 20. Ces motifs sont alors captés par les dispositifs d'acquisition d'images 18 et la transformation entre lesdits dispositifs d'acquisition d'images 18 et le vidéoprojecteur 19 sera alors optimisée en continu, c'est-à-dire à chaque nouvelle image extraite.

Un dispositif 22 permettant de réaliser les étapes du procédé 10 selon un mode de réalisation de l'invention est représenté en Figure 2. Ce dispositif 22 comprend un vidéoprojecteur 19 et au moins deux dispositifs d'acquisition d'images 18. La présence des deux dispositifs d'acquisition d'images 18 reliés à un ordinateur 21 permet d'obtenir une reconstruction tridimensionnelle de la surface d'intérêt 20 qui est captée par les dispositifs d'acquisition d'images. L'ordinateur 21, comprend un processeur et une mémoire et permet de faire le lien entre les points caractéristiques relevés sur la surface d'intérêt 20 et le modèle de conception numérique. Le vidéoprojecteur 19 sert à projeter les données virtuelles directement sur la surface d'intérêt 20 aux positions précises où une opération doit être effectuée.

Lorsque l'on projette une image avec une seule source de lumière on est souvent confronté à des problèmes de zones d'ombrage sur la surface d'intérêt 20 où l'on projette, dues au relief de la surface d'intérêt 20. On peut palier les problèmes d'ombrages sur la surface d'intérêt 20 en utilisant de deux à n dispositifs 22.

## Revendications

1. Procédé de projection d'informations issues d'un modèle numérique de conception **caractérisé en ce qu'**il comprend les étapes suivantes :
- une étape de calibration comprenant une acquisition de données caractéristiques provenant d'une surface d'intérêt, la comparaison desdites données caractéristiques avec des données virtuelles issues du modèle numérique de conception, et la détermination d'une position spatiale du dispositif de projection comprenant un vidéoprojecteur et au moins deux dispositifs d'acquisition d'image distincts, qui comporte les sous-étapes suivantes :
o projection de motifs de calibration sur ladite surface d'intérêt,
o analyse desdits motifs de calibration,
o création d'un ensemble de correspondances entre les dispositifs d'acquisition d'images et le vidéoprojecteur,
o détermination de la position spatiale des dispositifs d'acquisition d'images et du vidéoprojecteur en fonction d'un maximum de correspondances et,
- une étape de projection selon ladite position spatiale d'informations issues du modèle de conception numérique au moyen dudit vidéoprojecteur, sur ladite surface d'intérêt.

2. Procédé selon la revendication 1, dans lequel l'étape de calibration est réalisée en continue de la manière suivante : projection en complément du modèle de conception numérique et en continu desdits motifs de calibration et recalage de la calibration sur la surface d'intérêt, analyse des motifs par les dispositifs d'acquisition d'images et détermination continue de la position spatiale desdits dispositifs d'acquisition d'images et du vidéoprojecteur.

3. Procédé selon une des revendications précédentes, comprenant des étapes de détection et mise en évidence de différences entre ledit modèle de conception numérique et la réalité.

4. Procédé selon une des revendications précédentes, comprenant des étapes pour le suivi et la détermination de position spatiale d'objets mobiles connus dans le champ de vue des dispositifs d'acquisition d'images.

5. Procédé selon une des revendications précédentes, comprenant des étapes pour la compensation des vibrations et des étapes pour l'alerte en cas d'incapacité à effectuer cette compensation.

6. Procédé selon une des revendications précédentes, comprenant des étapes pour éviter les ombrages sur la surface d'intérêt.

7. Procédé selon une des revendications précédentes, comprenant des étapes pour effectuer les projections en trois dimensions.

8. Dispositif de projection d'informations issues d'un modèle numérique de conception **caractérisé en ce qu'**il comporte un vidéoprojecteur, un ordinateur et au moins deux dispositifs d'acquisition d'images et comprend en outre des moyens pour :
- acquérir des données caractéristiques provenant d'une surface d'intérêt,
- comparer lesdites données caractéristiques avec des données virtuelles issues du modèle de conception numérique,
- déterminer une position spatiale desdits dispositifs d'acquisition d'images, dudit vidéoprojecteur et dudit dispositif de projection, et,
- pour projeter, selon ladite position spatiale, des informations issues du modèle de conception numérique au moyen dudit vidéoprojecteur, sur ladite surface d'intérêt.

9. Dispositif selon la revendication 8, dans lequel les dispositifs d'acquisition d'images sont des caméras à obturation globale *(« global shutter »* en terminologie anglo-saxonne).

10. Dispositif selon une des revendications 8 ou 9, comprenant au moins deux sources d'éclairage infra rouge.

11. Dispositif selon une des revendications 8 à 10, comprenant un moyen apte à adapter les réglages des dispositifs d'acquisition d'images en fonction des vibrations et à déclencher un signal d'alerte lorsque les vibrations sont trop importantes.

12. Dispositif selon la revendication 11, dans lequel le moyen apte à adapter les réglages des dispositifs d'acquisition d'images en fonction des vibrations et à déclencher un signal d'alerte lorsque les vibrations sont trop importantes comprend un capteur inertiel rigidement lié au vidéoprojecteur.

13. Dispositif selon une des revendications 8 à 12, dans lequel le vidéoprojecteur est monté sur un système mécanique instrumenté comprenant un capteur de position et éventuellement motorisé.

14. Dispositif selon une des revendications 8 à 13, comprenant un système d'alimentation autonome.

15. Dispositif selon une des revendications 8 à 14, dans lequel tous les éléments du dispositif sont regroupés dans deux boîtiers, le premier comprenant le vidéoprojecteur et les dispositifs d'acquisition d'images et le second comprenant l'ordinateur et l'alimentation.
